(19) Europäisches Patentamt / European Patent Office / Office européen des brevets

(11) **EP 2 388 503 B1**

(12) **EUROPEAN PATENT SPECIFICATION**

(45) Date of publication and mention
of the grant of the patent:
**08.03.2017 Bulletin 2017/10**

(51) Int Cl.:
*F16L 9/18* *(2006.01)*  *H01F 27/02* *(2006.01)*
*H01F 27/10* *(2006.01)*  *F16L 39/00* *(2006.01)*

(21) Application number: **10162995.4**

(22) Date of filing: **17.05.2010**

(54) **Double-walled pipe assembly**

Doppelwandige Rohranordnung

Ensemble de tuyau à double paroi

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**23.11.2011 Bulletin 2011/47**

(73) Proprietor: **ABB Schweiz AG**
**5400 Baden (CH)**

(72) Inventors:
• **Missing, Kim**
**66510 Merikaarto (FI)**
• **Norolampi, Mika**
**66440 Tervajoki (FI)**

(56) References cited:
**US-A- 5 831 149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

The invention relates to double wall pipes with fittings and more particularly to double wall steel tube pipes and fittings.

US 5 831 149 A discloses a double barrier pipe assembly and method of fixing it to a tank, comprising the features of the preamble of claims 1 and 15.

Conducting fluid or gas in a pipe, there is a risk of leak from the pipe fittings or from the pipe itself.

Subsea installation is one example of a very challenging environment. Subsea installations are assemblies used under water, typically on the bottom ground of a sea. As an example of said subsea installations, power transformers used under the water can be mentioned. Typically these power transformers use insulation medium, i.e. the transformers are fluid insulated ones where the active core is submersed in e.g. transformer oil in a transformer tank. Examples of the other subsea liquid filled devices are subsea motors, subsea switchgears, subsea converters, rectifiers and hydraulic store tanks.

The subsea installations, for example subsea transformers need pressure compensators to keep the pressure of the tank close to the water pressure outside the transformer to avoid need to build heavy mechanical structures against the pressure.

The pressure compensator needs to be connected to the transformer tank by a pipe allowing the fluid flow between the transformer tank and the pressure compensator. Corrosion resistant type steel tubes are typically used. Reliable fittings, like SWAGELOK® MS with two ferrules for sealing and gripping could be used. Still there is a risk of leak of insulation fluid to the surrounding water. Using a double barrier structure for the pipe connection would reduce the risk of leak. A big problem there is how to connect both the inner and the outer pipes to the wall of a tank or a compensator. Further problem rises from the need for bending those two concentric pipes.

**BRIEF DESCRIPTION OF INVENTION**

The object of the present invention is to obtain an arrangement for pipes and fittings to eliminate the aforesaid problems. This is obtained by the present invention. The invention is characterized in what is disclosed in the independent claim 1. The preferred embodiments of the invention are disclosed in the dependent claims.

The invention is based on using of two concentric pipes and a sliding cup sealing the outer pipe and covering the fitting of the inner pipe. The cup is able to slide on the outer pipe allowing the fitting of the inner pipe to be tightened first. The inner radial diameter of the outer pipe is a little bit larger than the outer radial diameter of the inner pipe allowing the inner pipe installed inside to the outer pipe when both are essentially straight but still the double pipe arrangement is bendable.

**BRIEF DESCRIPTION OF FIGURES**

In the following the invention will be described in greater detail in connection with preferred embodiments, with reference to the attached drawings, wherein

Figure 1 is a schematic cross-section view of the fitting arrangement, the sliding cup being on its open position;
Figure 2 is a schematic cross-section view of the fitting arrangement in close position;
Figure 3 is a partial cross-section view showing the sealing and the guiding means between the duct of the sliding cup and the outer pipe;
Figure 4 is a cross section view of embodiment with welded inner pipe fixing and screw-fixed sliding cup;
Figure 5 is a cross section view of embodiment with Swagelok® fixed inner pipe and welded sliding cup;
Figure 6 is a cross section view of embodiment with welded inner pipe fixing and welded sliding cup;
Figure 7 is a cross section view of double barrier transformer tank arrangement with double pipe fittings;
Figure 8 is a cross section view of double barrier pipe arrangement with spring type wire arranged in to the intermediate space between the pipes;

**DETAILED DESCRIPTION OF THE INVENTION**

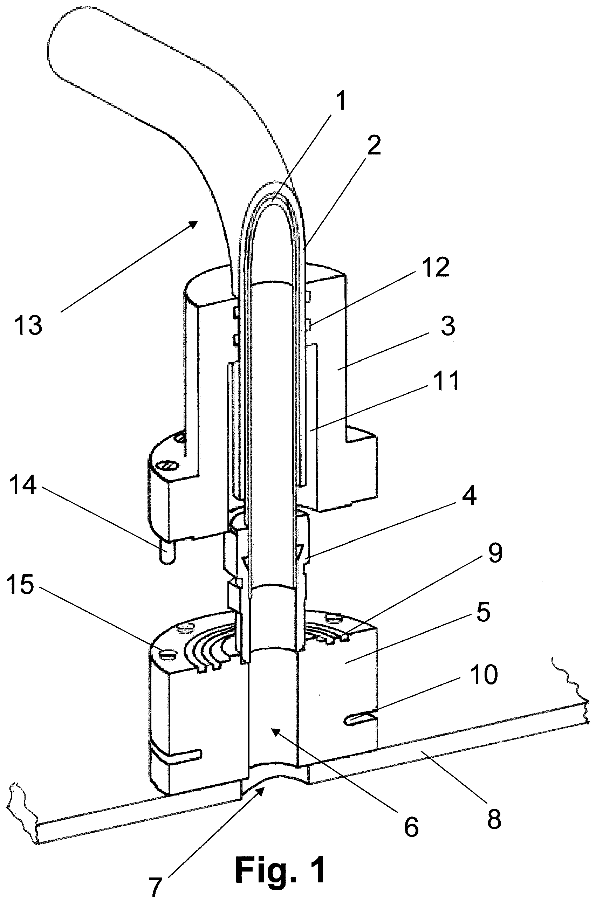

Fig. 1 shows a schematic cross-section view of a pipe fitting according to the invention. The key elements are the inner pipe 1, the outer pipe 2 and the sliding cup 3. In this embodiment a SWAGELOK® MS type inner pipe fitting means 4 and the base flange 5 exist, as well.

The base flange 5 is preferably a cylinder shape with a duct 6 for the fluid or gas to flow through. The duct 6 is directed face-to-face with the aperture 7 on the wall of the tank 8. The base flange 5 preferably has at least one groove 9 for sealing means, like a rubber-made O-ring. The sealing means is not shown in this figure. The base flange 5 is to be fixed on the wall of the tank preferably by welding, but soldering could be used, as well. The base flange 5 could have another groove 10 on its outer surface to make it easier to weld.

The sliding cup 3 is preferably a cylinder shape with a flange equipped with holes for the fitting means, like screws 14. The sliding cup 3 has a duct 11 to receive the outer pipe 2, the inner pipe 1 installed in and the duct 11 has an enlarged portion to receive the inner pipe fitting means 4. On the inner side of the duct 11 there is at least one groove 12 for sealing means, like a rubber-made O-ring, to avoid a leak between the outer pipe 2 and the sliding cup 3.

The inner pipe fitting means 4, e.g. a SWAGELOK® MS is preferably fixed by welding to the upper end of duct 6 of base flange 5.

The first bending 13 of the pipe arrangement shall be made at least on a certain distance from the end of the double pipe end which allows the cup 3 to slide on a position where the inner pipe fitting means 4 could be fixed. Fig.1 shows the sliding cup 3 on its extreme position close the bending 13 allowing to tighten the Swagelok® MS fitting by a hand tool.

When the inner pipe 1 has been fixed, the cup 3 is to be moved to cover the inner pipe fitting means 4 and to be fixed e.g. by screws 14 to the base flange 5 which has plurality of threaded holes 15.

Not shown in the figure, but instead of the screws and holes the sliding cup 3 and the base flange 5 could also be equipped with compatible threads allowing just to screw on the sliding cup 3 together with the base flange 5.

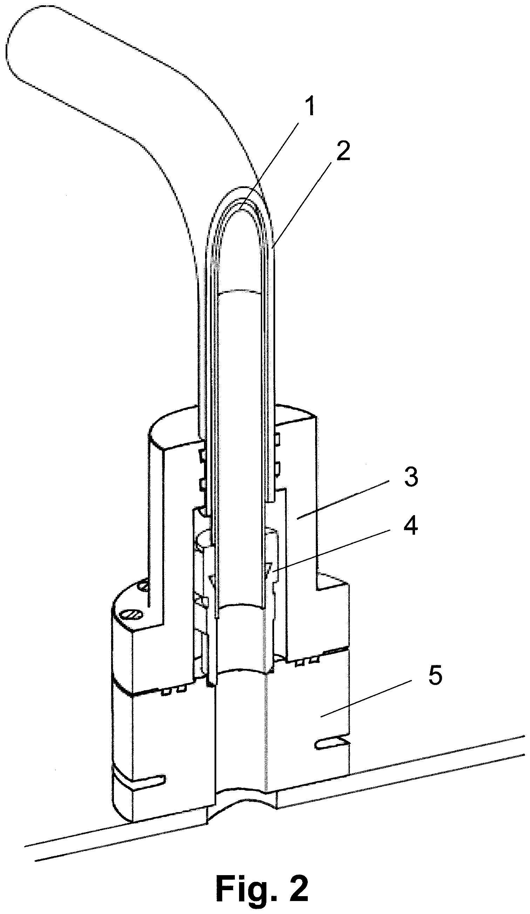

Fig. 2 shows the arrangement from the Fig. 1 moved and tightened on its final position.

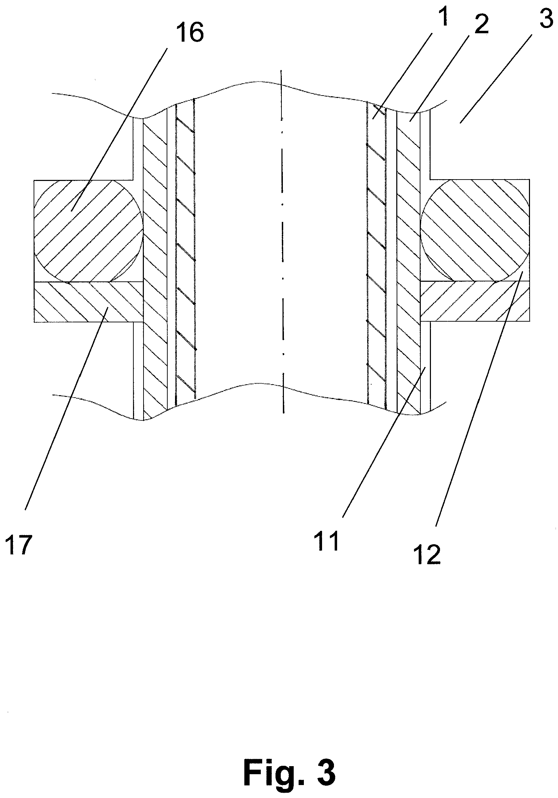

Fig. 3 shows a partial view of an embodiment of the sealing means for the sliding cup 3. On the groove 12 of the duct 11 of the sliding cup 3 there is a preferably a rubber-made O-ring 16 against the outer surface of the outer pipe 2. A nylon made guiding ring 17 is to prevent the steel made cup 3 to cut in on the steel made outer pipe 2, but e.g. on submersible applications a huge water pressure is directed to the 0-ring and the guide ring 17 is supporting the 0-ring not to escape.

There are several embodiments of the invention. Arrangement in Fig. 1 is the most flexible one. An aperture 7 is made on the wall 8 of the tank and the base flange 5 is welded at the factory. The pipe fittings could be made on the site. In a case of big subsea transformers, the pressure compensator is typically transported separately and fixed to the transformer body on the deck of the carriage ferry just before sinking down the combination to the bottom of the sea.

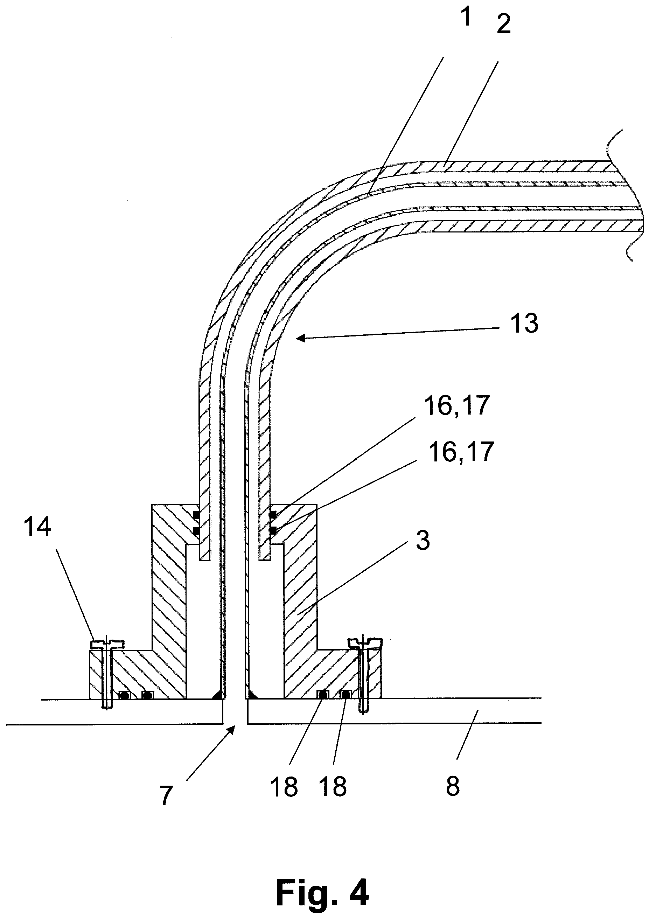

Fig. 4 shows another embodiment where the inner pipe 1 has been fixed by welding or soldering and no base flange exists. The surface of the tank wall around the aperture 7 is machined on a certain surface roughness that the sealing means 18, like rubber-made O-rings do work. The cup 3 is fixed by screws 14 directly on the wall of the tank 8 allowing later to check the welding of the inner pipe. This is very flat arrangement and especially useful when there is lack of horizontal space. Typically only another end of the pipe is needed to be fixed at site or disconnected afterwards. In a case of subsea transformers, the pipe arrangement could preferably be fixed to the pressure compensator at the factory and transport it as a ready tested unit to the site to be connected to the transformer tank at the site. In case like that, the first end of the double pipe assembly could be fixed with welding or soldering and only the second end left to be fixed at the site.

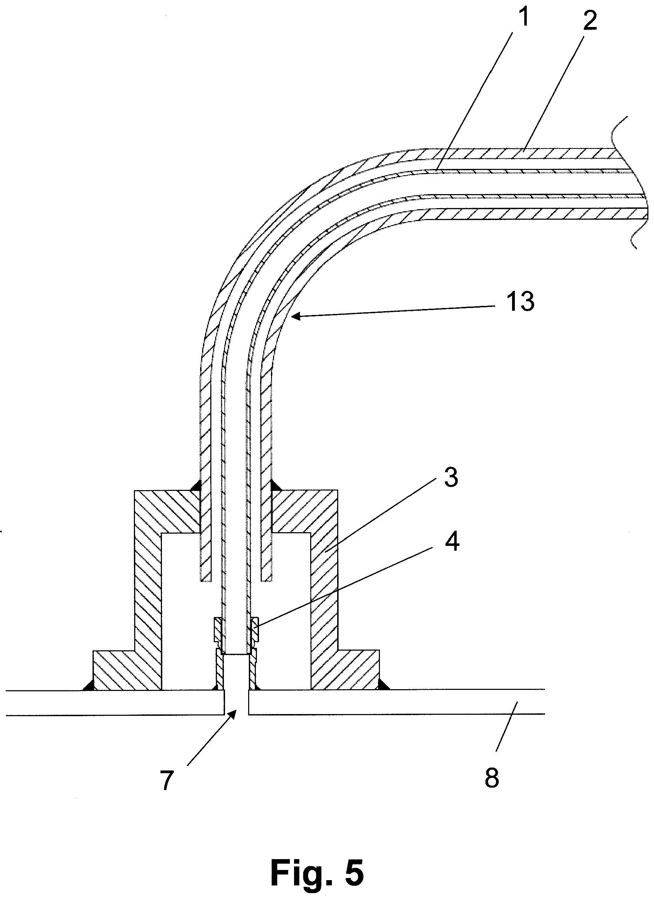

Fig. 5 shows another embodiment where the inner pipe 1 has been fixed by fitting means e.g. SWAGELOK® MS, which fitting means 4 is welded to the tank wall 8. The cup 3 has been welded to the wall of the tank 8 and to the outer pipe 2, as well. The benefit of this embodiment is that no sealing means for the sliding cup 3 is needed. The welded or soldered fastening seals safely even an aggressive chemical exists on the ambient. In a case that the cup fittings shall be opened afterwards, the welding of the sliding cup 3 shall be cut open using e.g. an angle grinder.

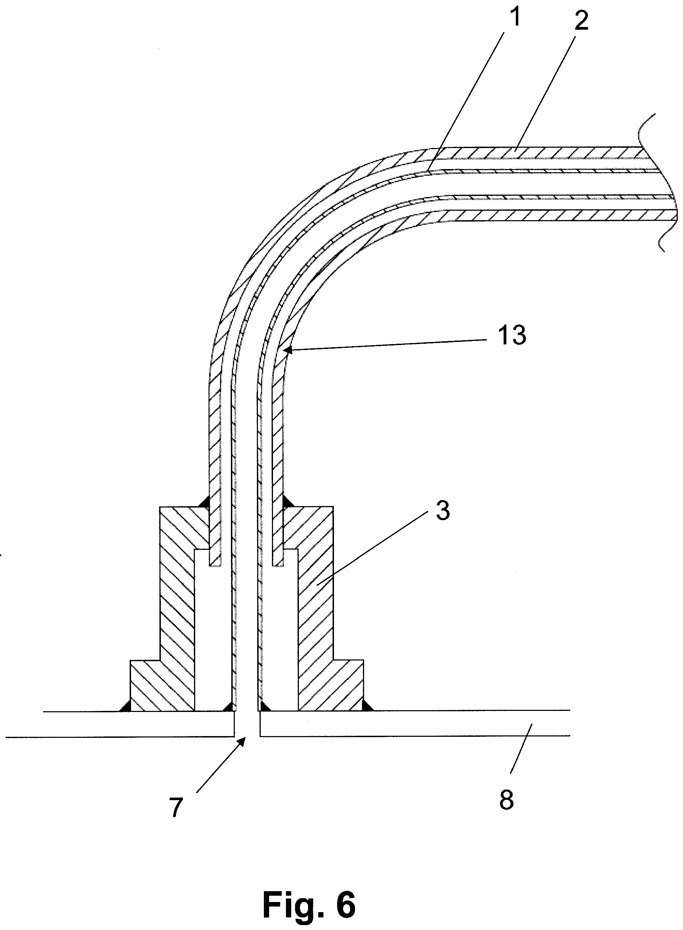

Fig. 6 shows a combination of embodiments of Fig. 4 and Fig. 5 where the inner pipe 1 is welded to the wall of tank 8 and the cup 3 is welded to the outer pipe 2 and to the wall of the tank 8. This embodiment is the simplest and cheapest one to build. Drawback is that in a case to open the fitting the inner pipe 1 shall be cut open, as well. The tank shall be made empty before that operation e.g. to avoid slag spoiling the cooling liquid.

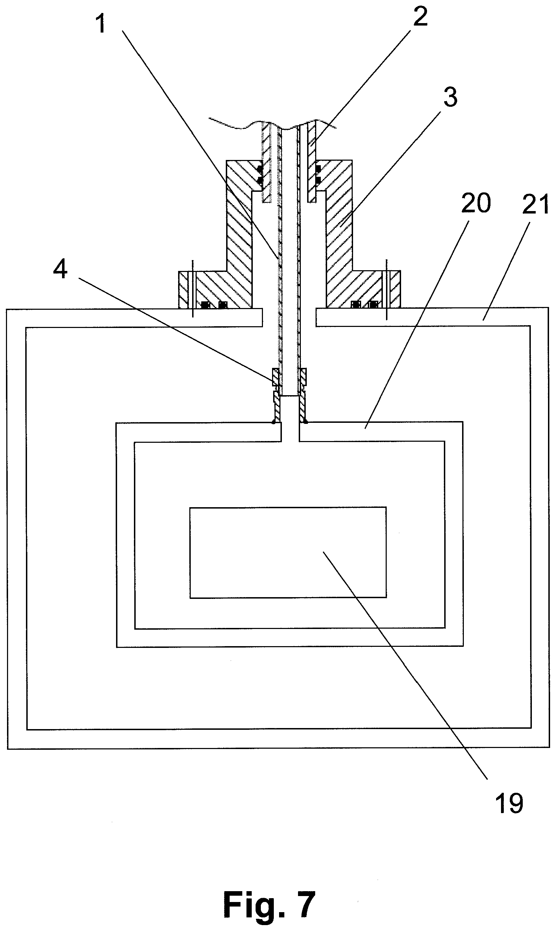

Fig. 7 shows a double barrier pipe fitting arrangement for a double barrier transformer tank. The transformer core 19 is immersed in the inner tank 20 filled with the cooling liquid. The inner pipe fitting means 4 is fixed to the wall of the inner tank 20. The inner tank 20 is immersed in the outer tank 21 which typically is filled with the cooling liquid, as well. The cup 3 is fixed to the wall of the outer tank 20. Another end of the double barrier pipe arrangement is connected to the double barrier pressure compensator not shown. We have now a double barrier construction as a whole. The space between the wall of the inner tank 20 and the wall of the outer tank 21 as well as between the inner pipe 1 and the outer pipe 2 could be monitored for giving an alarm in a case of a leak. In a case of subsea arrangement the sea water leaking in could be easily recognized by measuring the electrical conductivity of the liquid.

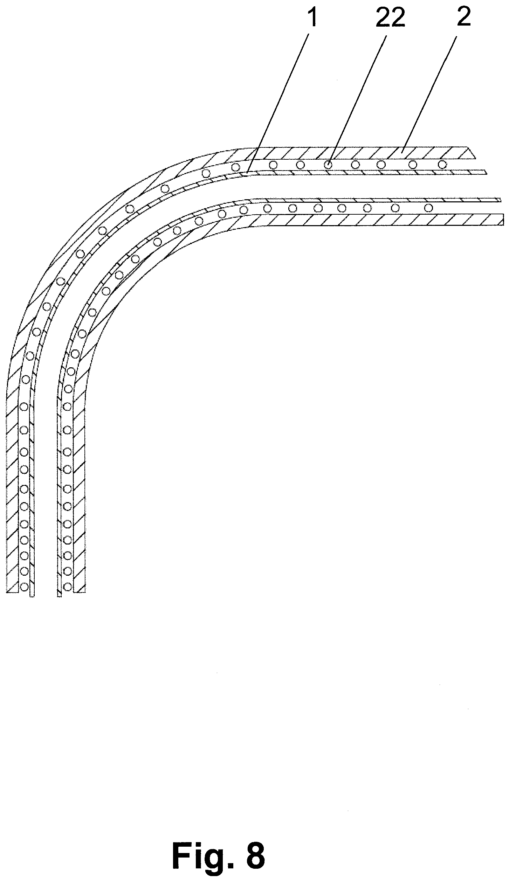

The Fig. 8 shows an embodiment for double pipe arrangement itself. The outer diameter $d_{o1}$ of the inner pipe 1 shall be close to the inner diameter $d_{i2}$ of the outer pipe 2 to make it possible to bend the double pipe arrangement. If the difference is too big, the inner pipe might not bend smoothly even a mandrel was used inside the inner pipe during the bending. In the Fig. 8 there is a steel wire 22 bend as a continuous spring in the space between the inner and outer pipes. The diameter $d_w$ of the wire 22 is slightly smaller than half of the difference between the inner diameter of the outer pipe and the outer diameter of the inner pipe to ensure successful bending of the pipe arrangement.

That could be presented as a formula

$$d_w \leq 0,5 \times (d_{i2} - d_{o1}).$$

The embodiments described above are not intended to restrict the invention but only to clarify the basic idea of the invention. It is quite clear that details can be varied freely within the scope of the claims. The invention is described here mostly in connection with subsea transformers. The invention is however not restricted solely to transformers or any subsea installations but the invention can be used for several applications where a double pipe arrangement is used for decreasing the risk for fluid or gas leaks.

**Claims**

1.  A double barrier pipe assembly comprising an inner primary pipe (1) for transferring liquid or gas and an outer secondary pipe (2) surrounding the inner pipe, the end of the inner pipe extending further than the end of the outer pipe, **characterized in that** the assembly comprises a cup (3) equipped with a duct (11) to receive the outer pipe (2) allowing the cup (3) to slide along the outer pipe (2) to allow to connect and fix the inner pipe (1) to a tank (8), the duct (11) further having a space to receive an inner pipe joint fitting (4) when the cup (3) is slid back along the outer pipe (2) after the inner pipe (1) has been fixed, the inner pipe joint fitting means used for fixing the inner pipe to the tank or to a base flange (5) attached to the tank (8) or to receive a welding or soldering between the inner pipe (1) and the tank (8), the assembly comprising means for attaching the cup (3) to the base flange (5) or the tank (8).

2.  A double barrier pipe assembly according to claim 1, **characterized in that** the inner side of the duct (11) of the cup has at least one groove (12) to receive a sealing ring (16) to seal against the outer surface of the outer pipe (2).

3.  A double barrier pipe assembly according to claim 2, **characterized in that** a guide ring (17) is arranged to support the sealing ring (16).

4.  A double barrier pipe assembly according to claim 1, **characterized in that** the cup (3) is to be fastened to the outer pipe (2) by welding or soldering after the inner pipe has been fixed to the tank (8) and the cup has been slid back.

5.  A double barrier pipe assembly according to any preceding claim, **characterized in that** it comprises sealing means (18) between the cup (3) and the tank (8).

6.  A double barrier pipe assembly according to any of claims 1 to 4, **characterized in that** the cup (3) is to be fastened to the tank (8) by welding or soldering after the inner pipe has been fixed to the tank (8) and the cup has been slid back.

7.  A double barrier pipe assembly according to any of claims 1 to 4, **characterized in that** it further comprises a base flange (5) to be fixed to the wall of the tank (8), having a duct (6) directed to an aperture (7) on the wall of the tank (8), and the cup (3) being suitable to be fixed to the base flange (5).

8.  A double barrier pipe assembly according to claim 7, **characterized in that** the inner pipe (1) is fixed to the duct (6) of the base flange.

9.  A double barrier pipe assembly according to claim 7 or 8, **characterized in that** the cup (3) and the base flange (5) have compatible threads to be fixed together with each other.

10. A double barrier pipe assembly according to any of claims 7 to 9, **characterized in that** the base flange is to be fixed to the tank by welding or soldering.

11. A double barrier pipe assembly according to any preceding claim, **characterized in that** the tank (8) comprises an inner tank (20) surrounded by an outer tank (22), the inner pipe (1) being suitable to be connected to the wall of the inner tank (20) and the outer pipe (2) being suitable to be connected to the wall of the outer tank (21).

12. A double barrier pipe assembly according to any preceding claim, **characterized in that** the interstitial space between the inner and outer pipes is filled with gas or fluid.

13. A double barrier pipe assembly according to claim 12, **characterized in that** the interstitial space is equipped with leak detection means.

14. A double barrier pipe assembly according to any preceding claim, **characterized in that** a spring type steel wire (22) of diameter $d_w$ is arranged between the inner pipe (1) and the outer pipe (2), where $d_{i2}$ is the inner diameter of the outer pipe (2) and $d_{o1}$ is the outer diameter of the inner pipe (1), and where: $d_w \leq 0.5 \times (d_{i2} - d_{o1})$.

15. Method of fixing a double barrier pipe assembly to a tank (8), the assembly comprising an inner pipe (1) for transferring fluid or gas and an outer pipe (2) surrounding the inner pipe, the end of the inner pipe extending further than the end of the outer pipe **characterized in that** the method comprises:

    sliding a sliding cup surrounding the outer pipe to a position where the inner pipe can be fixed to the tank;
    fixing the inner pipe to the tank by welding or soldering the inner pipe to tank, or by attaching the inner pipe to a joint fitting which is welded to the tank or by attaching the inner pipe to a joint fitting which is attached to a base flange which is attached to the tank;
    sliding the sliding cup (3) to cover the inner pipe joint fitting (4) or the welding or soldering of the inner pipe and the tank (8); and

fixing the sliding cup (3) to the tank (8) or to the base flange (5).

**Patentansprüche**

1. Doppelbarrieren-Rohranordnung, die ein inneres Primärrohr (1) zur Übertragung von Flüssigkeit oder Gas und ein das innere Rohr umgebendes äußeres Sekundärrohr (2) umfasst, wobei sich das Ende des inneren Rohrs weiter als das Ende des äußeren Rohrs erstreckt, **dadurch gekennzeichnet, dass** die Anordnung einen Becher (3) umfasst, der mit einem Kanal (11) zur Aufnahme des äußeren Rohrs (2) ausgestattet ist, wodurch der Becher (3) entlang dem äußeren Rohr (2) gleiten kann, um ein Verbinden und Fixieren des inneren Rohrs (1) mit bzw. an einem Tank (8) zu gestatten, wobei der Kanal (11) ferner einen Raum zur Aufnahme eines Verbindungsfittings (4) des inneren Rohrs, wenn der Becher (3) nach dem Fixieren des inneren Rohrs (1) entlang dem äußeren Rohr (2) zurückgeschoben wird, aufweist, wobei das Verbindungsfittingmittel des inneren Rohrs zum Fixieren des inneren Rohrs an dem Tank oder an einem am Tank (8) befestigten Basisflansch (5) oder zur Aufnahme einer Schweiß- oder Lötverbindung zwischen dem inneren Rohr (1) und dem Tank (8) verwendet wird, wobei die Anordnung ein Mittel zum Befestigen des Bechers (3) an dem Basisflansch (5) oder dem Tank (8) umfasst.

2. Doppelbarrieren-Rohranordnung nach Anspruch 1, **dadurch gekennzeichnet, dass** die Innenseite des Kanals (11) des Bechers mindestens eine Nut (12) zur Aufnahme eines Dichtungsrings (16) zum Abdichten gegen die Außenfläche des äußeren Rohrs (2) aufweist.

3. Doppelbarrieren-Rohranordnung nach Anspruch 2, **dadurch gekennzeichnet, dass** ein Führungsring (17) zum Abstützen des Dichtungsrings (16) angeordnet ist.

4. Doppelbarrieren-Rohranordnung nach Anspruch 1, **dadurch gekennzeichnet, dass** der Becher (3) nach dem Fixieren des inneren Rohrs an dem Tank (8) und Zurückschieben des Bechers durch Schweißen oder Löten an dem äußeren Rohr (2) angebracht werden soll.

5. Doppelbarrieren-Rohranordnung nach einem vorhergehenden Anspruch, **dadurch gekennzeichnet, dass** sie ein Dichtungsmittel (18) zwischen dem Becher (3) und dem Tank (8) umfasst.

6. Doppelbarrieren-Rohranordnung nach einem der Ansprüche 1 bis 4, **dadurch gekennzeichnet, dass** der Becher (3) nach dem Fixieren des inneren Rohrs an dem Tank (8) und Zurückschieben des Bechers durch Schweißen oder Löten an dem Tank (8) angebracht werden soll.

7. Doppelbarrieren-Rohranordnung nach einem der Ansprüche 1 bis 4, **dadurch gekennzeichnet, dass** sie ferner einen an der Wand des Tanks (8) zu fixierenden Basisflansch (5) umfasst, der einen zu einer Öffnung (7) an der Wand des Tanks (8) weisenden Kanal (6) aufweist, und wobei der Becher (3) zum Fixieren an dem Basisflansch (5) geeignet ist.

8. Doppelbarrieren-Rohranordnung nach Anspruch 7, **dadurch gekennzeichnet, dass** das innere Rohr (1) am Kanal (6) des Basisflansches fixiert ist.

9. Doppelbarrieren-Rohranordnung nach Anspruch 7 oder 8, **dadurch gekennzeichnet, dass** der Becher (3) und der Basisflansch (5) kompatible Gewinde zum Fixieren aneinander haben.

10. Doppelbarrieren-Rohranordnung nach einem der Ansprüche 7 bis 9, **dadurch gekennzeichnet, dass** der Basisflansch durch Schweißen oder Löten am Tank fixiert werden soll.

11. Doppelbarrieren-Rohranordnung nach einem vorhergehenden Anspruch, **dadurch gekennzeichnet, dass** der Tank (8) einen inneren Tank (20), der von einem äußeren Tank (22) umgeben ist, umfasst, wobei das innere Rohr (1) zur Verbindung mit der Wand des inneren Tanks (20) geeignet ist und das äußere Rohr (2) zur Verbindung mit der Wand des äußeren Tanks (21) geeignet ist.

12. Doppelbarrieren-Rohranordnung nach einem vorhergehenden Anspruch, **dadurch gekennzeichnet, dass** der Zwischenraum zwischen dem inneren und dem äußeren Rohr mit einem Gas oder Fluid gefüllt ist.

13. Doppelbarrieren-Rohranordnung nach Anspruch 12, **dadurch gekennzeichnet, dass** der Zwischenraum mit einem Leckagedetektionsmittel ausgestattet ist.

14. Doppelbarrieren-Rohranordnung nach einem vorhergehenden Anspruch, **dadurch gekennzeichnet, dass** ein Federstahldraht (22) mit einem Durchmesser $d_w$ zwischen dem inneren Rohr (1) und dem äußeren Rohr (2) angeordnet ist, wobei $d_{i2}$ der Innendurchmesser des äußeren Rohrs (2) ist und $d_{o1}$ der Außendurchmesser des inneren Rohrs (1) ist, und wobei: $d_w \leq 0,5 \times (d_{i2} - d_{o1})$.

15. Verfahren zum Fixieren einer Doppelbarrieren-Rohranordnung an einem Tank (8), wobei die Anordnung ein inneres Rohr (1) zur Übertragung von Fluid oder Gas und ein das innere Rohr umgebendes äußeres Rohr (2) umfasst, wobei sich das Ende des inneren Rohrs weiter als das Ende des äußeren Rohrs erstreckt, **dadurch gekennzeichnet, dass** das Verfahren Folgendes umfasst:

Schieben eines das äußere Rohr umgebenden Verschiebebechers in eine Position, in der das innere Rohr an dem Tank fixiert werden kann; Fixieren des inneren Rohrs an dem Tank durch Schweißen oder Löten des inneren Rohrs an den Tank oder durch Befestigen des inneren Rohrs an einem Verbindungsfitting, das an den Tank geschweißt ist, oder durch Befestigen des inneren Rohrs an einem Verbindungsfitting, das an einem an dem Tank befestigten Basisflansch befestigt ist; Verschieben des Verschiebebechers (3) zum Bedecken des Verbindungsfittings (4) des inneren Rohrs oder der Schweiß- oder Lötverbindung des inneren Rohrs und des Tanks (8); und Fixieren des Verschiebebechers (3) an dem Tank (8) oder an dem Basisflansch (5).

## Revendications

1. Ensemble de tuyau à double paroi comprenant un tuyau primaire intérieur (1) pour transférer un liquide ou un gaz et un tuyau secondaire extérieur (2) entourant le tuyau intérieur, l'extrémité du tuyau intérieur s'étendant plus loin que l'extrémité du tuyau extérieur, **caractérisé en ce que** l'ensemble comprend une coupelle (3) munie d'un conduit (11) pour recevoir le tuyau extérieur (2), en permettant à la coupelle (3) de glisser le long du tuyau extérieur (2) pour permettre de connecter et de fixer le tuyau intérieur (1) à un réservoir (8), le conduit (11) ayant en outre un espace destiné à recevoir un raccord de joint de tuyau intérieur (4) lorsque la coupelle (3) est ramenée par glissement le long du tuyau extérieur (2) après que le tuyau intérieur (1) a été fixé, le moyen de raccord de joint de tuyau intérieur étant utilisé pour fixer le tuyau intérieur au réservoir ou à une bride de base (5) fixée au réservoir (8) ou pour recevoir un soudage ou un brasage entre le tuyau intérieur (1) et le réservoir (8), l'ensemble comprenant un moyen pour attacher la coupelle (3) à la bride de base (5) ou au réservoir (8).

2. Ensemble de tuyau à double paroi selon la revendication 1, **caractérisé en ce que** le côté intérieur du conduit (11) de la coupelle présente au moins une gorge (12) pour recevoir une bague d'étanchéité (16) destinée à réaliser l'étanchéité contre la surface extérieure du tuyau extérieur (2).

3. Ensemble de tuyau à double paroi selon la revendication 2, **caractérisé en ce qu'**une bague de guidage (17) est prévue pour supporter la bague d'étanchéité (16).

4. Ensemble de tuyau à double paroi selon la revendication 1, **caractérisé en ce que** la coupelle (3) doit être attachée au tuyau extérieur (2) par soudage ou brasage après que le tuyau intérieur a été fixé au réservoir (8) et que la coupelle a été ramenée par glissement.

5. Ensemble de tuyau à double paroi selon l'une quelconque des revendications précédentes, **caractérisé en ce qu'**il comprend un moyen d'étanchéité (18) entre la coupelle (3) et le réservoir (8).

6. Ensemble de tuyau à double paroi selon l'une quelconque des revendications 1 à 4, **caractérisé en ce que** la coupelle (3) doit être attachée au réservoir (8) par soudage ou brasage après que le tuyau intérieur a été fixé au réservoir (8) et que la coupelle a été ramenée par glissement.

7. Ensemble de tuyau à double paroi selon l'une quelconque des revendications 1 à 4, **caractérisé en ce qu'**il comprend en outre une bride de base (5) destinée à être fixée à la paroi du réservoir (8), présentant un conduit (6) dirigé vers une ouverture (7) sur la paroi du réservoir (8), et la coupelle (3) étant prévue pour être fixée sur la bride de base (5).

8. Ensemble de tuyau à double paroi selon la revendication 7, **caractérisé en ce que** le tuyau intérieur (1) est fixé au conduit (6) de la bride de base.

9. Ensemble de tuyau à double paroi selon la revendication 7 ou 8, **caractérisé en ce que** la coupelle (3) et la bride de base (5) ont des filetages compatibles destinés à être fixés l'un à l'autre.

10. Ensemble de tuyau à double paroi selon l'une quelconque des revendications 7 à 9, **caractérisé en ce que** la bride de base doit être fixée au réservoir par soudage ou brasage.

11. Ensemble de tuyau à double paroi selon l'une quelconque des revendications précédentes, **caractérisé en ce que** le réservoir (8) comprend un réservoir intérieur (20) entouré par un réservoir extérieur (22), le tuyau intérieur (1) étant apte à être connecté à la paroi du réservoir intérieur (20) et le tuyau extérieur (2) étant apte à être connecté à la paroi du réservoir extérieur (21).

12. Ensemble de tuyau à double paroi selon l'une quelconque des revendications précédentes, **caractérisé en ce que** l'espace interstitiel entre les tuyaux intérieur et extérieur est rempli de gaz ou de liquide.

**13.** Ensemble de tuyau à double paroi selon la revendication 12, **caractérisé en ce que** l'espace interstitiel est équipé d'un moyen de détection des fuites.

**14.** Ensemble de tuyau à double paroi selon l'une quelconque des revendications précédentes, **caractérisé en ce qu'**un fil d'acier de type à ressort (22) de diamètre $d_w$ est prévu entre le tuyau intérieur (1) et le tuyau extérieur (2),
$d_{i2}$ étant le diamètre intérieur du tuyau extérieur (2) et $d_{o1}$ étant le diamètre extérieur du tuyau intérieur (1), et $d_w \leq 0,5 \times (d_{i2} - d_{o1})$.

**15.** Procédé de fixation d'un ensemble de tuyau à double paroi à un réservoir (8), l'ensemble comprenant un tuyau intérieur (1) pour transférer un fluide ou un gaz et un tuyau extérieur (2) entourant le tuyau intérieur, l'extrémité du tube intérieur s'étendant plus loin que l'extrémité du tuyau extérieur, **caractérisé en ce que** le procédé comprend :

faire glisser une coupelle glissante entourant le tube extérieur jusque dans une position dans laquelle le tuyau intérieur peut être fixé au réservoir ;
fixer le tuyau intérieur au réservoir par soudage ou brasage du tuyau intérieur au réservoir, ou en fixant le tuyau intérieur à un raccord de joint qui est soudé au réservoir ou en fixant le tuyau intérieur à un raccord de joint qui est fixé à une bride de base qui est fixée au réservoir ;
faire glisser la coupelle glissante (3) de manière à ce qu'elle recouvre le raccord de joint de tuyau intérieur (4) ou le soudage ou le brasage du tuyau intérieur et du réservoir (8) ; et
fixer la coupelle glissante (3) au réservoir (8) ou à la bride de base (5).

**Fig. 1**

**Fig. 2**

**Fig. 3**

**Fig. 4**

**Fig. 5**

**Fig. 6**

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5831149 A